# EUROPEAN PATENT APPLICATION

(11) **EP 4 582 252 A1**
(43) Date of publication of application: **09.07.2025**
(21) Application number: 23860232.0
(22) Date of filing: 25.08.2023
(51) Int. Cl.: B32B 27/12, C08J 7/048, B65D 65/40

(54) **LAMINATE, PACKAGING FILM, AND METHOD FOR MANUFACTURING LAMINATE**

(30) Priority: 01.09.2022 JP 2022139355
(71) Applicant: Mitsui Chemicals, Inc., Tokyo 104-0028 (JP)
(72) Inventor: SAKAMOTO, Natsuki, Sodegaura-shi, Chiba 299-0265 (JP); HIROTA, Yoshihito, Sodegaura-shi, Chiba 299-0265 (JP)
(74) Representative: Hoffmann Eitle
(86) International application number: PCT/JP2023/030821
(87) International publication number: WO 2024/048470

(57) **Abstract**

A laminate (1) includes a substrate (2) and a heat seal layer (3). The heat seal layer (3) is a dried product of a coating composition. The coating composition contains a resin component consisting of a copolymer of 4-methyl-1-pentene and an α-olefin (except 4-methyl-1-pentene) and/or a modified copolymer of the copolymer. In the copolymer, the content ratio of a structural unit derived from the 4-methyl-1-pentene is 50 mol% or more and 99 mol% or less, and the content ratio of a structural unit derived from the α-olefin is 1 mol% or more and 50 mol% or less, with respect to the total amount of the structural unit derived from the 4-methyl-1-pentene and the structural unit derived from the α-olefin. Each of the oxygen permeation coefficient and the carbon dioxide permeation coefficient of the laminate is 1000cm³·mm/(m²·24hr·atm) or more.

## Description

### TECHNICAL FIELD

The present invention relates to a laminate, a packaging film, and a method of producing the laminate, and more particularly, to a laminate, a packaging film including the laminate, and a method of producing the laminate.

### BACKGROUND ART

Conventionally, it has been known that a film formed from a copolymer including a structural unit derived from the 4-methyl-1-pentene has excellent gas permeability. Therefore, such a film is preferably used, for example, as a packaging material for fresh food.

As such a film, for example, a film obtained by casting a resin composition containing a thermoplastic resin (A) which is a copolymer containing a structural unit derived from the 4-methyl-1-pentene and a structural unit derived from an α-olefin having 2 or more and 20 or less carbon atoms, and a thermoplastic resin (B) which is an olefin copolymer and is other than the thermoplastic resin (A) has been proposed (see, for example, Patent Document 1).

### Citation List

### Patent Document

Patent Document 1: Japanese Unexamined Patent Publication No. 2016-121322

### SUMMARY OF THE INVENTION

### PROBLEM TO BE SOLVED BY THE INVENTION

However, the film is required to have heat sealability together with gas permeability.

In Patent Document 1, from the viewpoint of improving the heat sealability, a polymer (specifically, a thermoplastic resin (B)) other than the polymer including a structural unit derived from the 4-methyl-1-pentene is blended. However, when the thermoplastic resin (B) is blended, there is a problem that the gas permeability is lowered.

The present invention provides a laminate excellent in gas permeability and heat sealability, a packaging film including the laminate, and a method of producing the laminate.

### MEANS FOR SOLVING THE PROBLEM

The present invention [1] includes a laminate including a substrate and a heat seal layer in order toward one side in a thickness direction, wherein the heat seal layer is a dried product of a coating composition, wherein the coating composition includes a resin component, wherein the resin component consists of a copolymer of 4-methyl-1-pentene and an α-olefin (except 4-methyl-1-pentene) having 2 or more and 20 or less carbon atoms and/or a modified product of the copolymer, wherein in the copolymer, with respect to a total amount of a structural unit derived from the 4-methyl-1-pentene and a structural unit derived from the α-olefin, a content ratio of the structural unit derived from the 4-methyl-1-pentene is 50 mol% or more and 99 mol% or less, and a content ratio of the structural unit derived from the α-olefin is 1 mol% or more and 50 mol% or less, and wherein the laminate has an oxygen permeation coefficient of 1000cm³·mm/(m²·24hr·atm) or more and a carbon dioxide permeation coefficient of 1000cm³·mm/(m²·24hr·atm) or more.

The present invention [2] includes the laminate described in the above-described [1], wherein the substrate is a gas-permeable porous substrate or a substrate made of a polymer of 4-methyl-1-pentene.

The present invention [3] includes the laminate described in the above-described [1] or [2], wherein the heat seal layer has a thickness of 1 µm or more and less than 50 µm.

The present invention [4] includes the laminate described in any one of the above-described [1] to [3], having a peel strength of 2.0N/15mm or more, the peel strength measured by the following test. Test: Two laminates are prepared. A film is produced by attaching the two laminates so that the heat seal layers of the two laminates are in contact with each other, and heat-sealing the two laminates under conditions of 160°C, 0.3 MPa, and 2 seconds. The peel strength is measured by peeling the film in a direction of 180° with respect to its heat seal surface under conditions of a tensile rate of 50mm/minute and a temperature of 23°C.

The present invention [5] includes a packaging film including the laminate described in any one of the above-described [1] to [4].

The present invention [6] includes a method of producing the laminate described in any one of the above-described [1] to [4], the method including: a first step of preparing the substrate; a second step of dissolving the coating composition in an organic solvent to prepare a varnish; and a third step of applying the varnish to one surface of the substrate in the thickness direction and drying the varnish to dispose the heat seal layer.

### EFFECTS OF THE INVENTION

In the laminate of the present invention, the heat seal layer is a dried product of the coating composition. Therefore, excellent heat sealability is achieved.

Further, in this laminate, the coating composition includes a resin component consisting of a copolymer of 4-methyl-1-pentene and an α-olefin (except 4-methyl-1-pentene) having 2 or more and 20 or less carbon atoms, and/or a modified product of the copolymer. Therefore, the gas permeability can be improved.

The packaging film of the present invention includes the laminate of the present invention. Therefore, the packaging film is excellent in gas permeability and heat sealability.

The method of producing the laminate of the present invention includes the second step of dissolving the coating composition in an organic solvent to prepare a varnish, and the third step of applying the varnish to one surface of the substrate in the thickness direction and drying the varnish to dispose a heat seal layer. That is, by the second step and the third step, a heat seal layer, which is a dried product of the coating composition, can be disposed on one surface of the substrate in the thickness direction. Therefore, according to this method, it is possible to produce a laminate having excellent heat sealability.

Further, the method of producing the laminate uses a coating composition containing a resin component consisting of a copolymer of 4-methyl-1-pentene and an α-olefin (except 4-methyl-1-pentene) having 2 or more and 20 or less carbon atoms and/or a modified product of the copolymer. Therefore, according to this method, a laminate having excellent gas permeability can be produced.

### BRIEF DESCRIPTION OF THE DRAWINGS

FIG. 1 is a schematic view showing one embodiment of the laminate of the present invention.
FIG. 2 is a schematic view showing one embodiment of a method of producing the laminate of the present invention.

### DESCRIPTION OF THE EMBODIMENTS

### <Laminate>

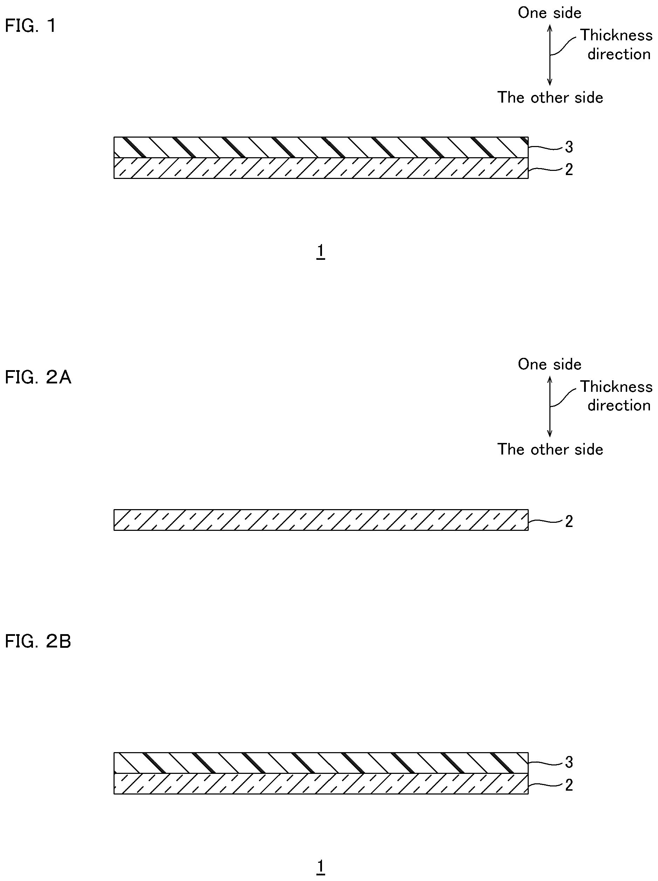

Referring to FIG. 1, one embodiment of the laminate of the present invention is detailed.

In FIG. 1, the up-down direction on the surface of the drawing sheet is an up-down direction (thickness direction). The upper side on the surface of the drawing sheet is an upper side (one side in the thickness direction). The lower side on the surface of the drawing sheet is a lower side (the other side in the thickness direction). In addition, a right-left direction and a depth direction on the surface of the drawing sheet are plane directions orthogonal to the up-down direction. Specifically, the directions conform to the arrow indicating a direction in each drawing.

**A laminate** 1 has a film shape (including a sheet shape) having a predetermined thickness. The laminate 1 extends in a plane direction orthogonal to the thickness direction.

As shown in FIG. 1, the laminate 1 includes a substrate 2 and a heat seal layer 3 in order toward one side in the thickness direction.

Specifically, the laminate 1 includes a substrate 2 and a heat seal layer 3 disposed on an upper surface (one surface in the thickness direction) of the substrate 2.

The thickness of the laminate 1 is, for example, 5 µm or more, and for example, 10000 µm or less.

### <Substrate>

The substrate 2 has a sheet shape extending along a plane direction (a direction orthogonal to the thickness direction) and having a front surface and a back surface.

The substrate 2 is preferably selected such that the gas permeability described later reaches a predetermined value or more.

Examples of the substrate 2 include a gas-permeable porous substrate and a substrate made of a polymer of 4-methyl-1-pentene (preferably, a homopolymer of 4-methyl-1-pentene).

Examples of the gas-permeable porous substrate include, for example, paper, fabrics, knits, and nonwoven fabrics. Specifically, such a porous substrate is made of, for example, polyolefin, polyester, a natural fiber typified by cellulose, a fluorine-based resin, a silicone-based resin, and a urethane-based resin.

As the substrate 2, a gas-permeable porous substrate is preferably used. When the substrate 2 is a gas-permeable porous substrate, a dried product of the coating composition (described later) can be impregnated in the substrate 2, and the anchoring effect caused thereby improves the adhesion between the substrate 2 and the heat seal layer 3. As a result, the heat sealability is improved.

The thickness of the substrate 2 is, for example, 1 µm or more, and, for example, 9999 µm or less.

### <Heat Seal Layer>

The heat seal layer 3 has a sheet shape extending along the plane direction (direction orthogonal to the thickness direction) and having flat front and back surfaces. The heat seal layer 3 is in contact with one surface of the substrate 2 in the thickness direction.

The heat seal layer 3 is a dried product of the coating composition. Therefore, excellent heat sealability is achieved.

The coating composition contains a resin component.

### [Resin Component]

The resin component consists of a copolymer of 4-methyl-1-pentene and an α-olefin (except 4-methyl-1-pentene) having 2 or more and 20 or less carbon atoms (hereinafter, may be referred to as a copolymer of the 4-methyl-1-pentene and α-olefin), and/or a modified product of the copolymer of the 4-methyl-1-pentene and α-olefin. **In** other words, the resin component substantially contains only a copolymer of the 4-methyl-1-pentene and α-olefin and/or a modified product of the copolymer of the 4-methyl-1-pentene and α-olefin. The fact that the resin component substantially contains only a copolymer of the 4-methyl-1-pentene and α-olefin and/or a modified product of the copolymer of the 4-methyl-1-pentene and α-olefin means that the content ratio of the copolymer of the 4-methyl-1-pentene and α-olefin and/or the modified product of the copolymer of the 4-methyl-1-pentene and α-olefin is, for example, 95% by mass or more, preferably 99% by mass or more, more preferably 99.9% by mass or more, and even more preferably 100% by mass, with respect to the resin component.

When the resin component consists of a copolymer of the 4-methyl-1-pentene and α-olefin and/or a modified product of the copolymer of the 4-methyl-1-pentene and α-olefin, the gas permeability can be improved.

### (Copolymer of 4-methyl-1-pentene and α-olefin)

The copolymer of the 4-methyl-1-pentene and α-olefin is a polymerization product of 4-methyl-1-pentene and an α-olefin having 2 or more and 20 or less carbon atoms.

Examples of the α-olefin having 2 or more and 20 or less carbon atoms include a linear α-olefin having 2 or more and 20 or less carbon atoms and a branched α-olefin having 2 or more and 20 or less carbon atoms.

Examples of the linear α-olefin having 2 or more and 20 or less carbon atoms include ethylene, propylene, 1-butene, 1-pentene, 1-hexene, 1-octene, 1-decene, 1-dodecene, 1-tetradecene, 1-hexadecene, 1-octadecene, and 1-eicosene.

Examples of the branched α-olefin having 2 or more and 20 or less carbon atoms include 3-methyl-1-butene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, and 3-ethyl-1-hexene.

As the α-olefin having 2 or more and 20 or less carbon atoms, a linear α-olefin having 2 or more and 20 or less carbon atoms is preferably used. As the α-olefin having 2 or more and 20 or less carbon atoms, a linear α-olefin having 2 to 4 carbon atoms is more preferably used. As the α-olefin having 2 or more and 20 or less carbon atoms, propylene is even more preferably used.

The α-olefin having 2 or more and 20 or less carbon atoms may be used singly or in combination of two or more.

The copolymer of the 4-methyl-1-pentene and α-olefin is obtained by polymerizing 4-methyl-1-pentene and an α-olefin having 2 or more and 20 or less carbon atoms according to the method described in WO 2004/87775. Specifically, the copolymer of the 4-methyl-1-pentene and α-olefin is obtained by polymerizing 4-methyl-1-pentene and an α-olefin having 2 or more and 20 or less carbon atoms in the presence of a metallocene catalyst.

In this manner, the copolymer of the 4-methyl-1-pentene and α-olefin (a reaction solution containing the copolymer of the 4-methyl-1-pentene and α-olefin) is obtained.

In the copolymer of the 4-methyl-1-pentene and α-olefin, the content ratio of the structural unit derived from the 4-methyl-1-pentene is 50 mol % or more, preferably 60 mol % or more, and 99 mol % or less, preferably 90 mol % or less with respect to the total amount of the structural unit derived from the 4-methyl-1-pentene and the structural unit derived from the α-olefin.

When the content ratio of the structural unit derived from the 4-methyl-1-pentene is the above-described lower limit or more, the gas permeability can be improved.

On the other hand, when the content ratio of the structural unit derived from the 4-methyl-1-pentene is less than the above-described lower limit, the gas permeability is lowered.

When the content ratio of the structural unit derived from the 4-methyl-1-pentene is the above-described upper limit or less, the heat sealability and the film forming properties can be improved.

On the other hand, when the content ratio of the structural unit derived from the 4-methyl-1-pentene exceeds the above upper limit, the heat sealability and the film forming properties are lowered.

The structural unit derived from the α-olefin is 1 mol% or more, preferably 10 mol% or more, and 50 mol% or less, preferably 40 mol% or less with respect to the total amount of the structural unit derived from the 4-methyl-1-pentene and the structural unit derived from the α-olefin.

When the structural unit derived from the α-olefin is the above-described lower limit or more, the heat sealability and the film forming properties can be improved.

On the other hand, when the structural unit derived from the α-olefin is less than the above-described lower limit, the heat sealability and the film forming properties are lowered.

When the structural unit derived from the α-olefin is the above-described upper limit or less, the gas permeability can be improved.

On the other hand, when the structural unit derived from the α-olefin exceeds the above-described upper limit, the gas permeability is lowered.

The content ratio of the structural unit derived from the 4-methyl-1-pentene and the content ratio of the structural unit derived from the α-olefin can be confirmed, for example, by a known method such as ¹³C-NMR measurement.

Further, the weight-average molecular weight of the copolymer of the 4-methyl-1-pentene and α-olefin, which is measured by a GPC method (gel permeation chromatography method) and is converted into a standard polystyrene, is, for example, 10000 or more, preferably 50000 or more, more preferably 100000 or more, even more preferably 300000 or more, and is, for example, 500000 or less, preferably 400000 or less.

The weight-average molecular weight/number-average molecular weight (Mw/Mn) of the copolymer of the 4-methyl-1-pentene and α-olefin is, for example, 1.5 or more, preferably 2.0 or more, and for example, 4.0 or less, preferably 3.0 or less.

The melting point of the copolymer of the 4-methyl-1-pentene and α-olefin is not observed. Alternatively, when the melting point is observed, the melting point is, for example, 199°C or less, preferably 150°C or less, more preferably 140°C or less, and for example, 80°C or more, preferably 100°C or more.

When the melting point of the copolymer of the 4-methyl-1-pentene and α-olefin is not observed or when the melting point is the above upper limit or less, the heat sealability can further be improved.

The melting point can be measured by a differential scanning calorimeter (the same applies hereinafter). **In** addition, the fact that no melting point is observed means that a crystal melting peak having a crystal melting heat of 1J/g or more is not observed in a range of -150°C or more and 200°C or less in a measurement by a differential scanning calorimeter.

### (Modified Product of Copolymer of the 4-methyl-1-pentene and α-olefin)

A modified product of the copolymer of the 4-methyl-1-pentene and α-olefin (hereinafter, may be referred to as a modified product) is obtained by graft-modifying a copolymer of the 4-methyl-1-pentene and α-olefin with a graft component.

Examples of the graft component include a hydroxyl group-containing ethylenically unsaturated compound, an amino group-containing ethylenically unsaturated compound, an unsaturated carboxylic acid, an unsaturated carboxylic acid anhydride, a vinyl ester compound, and a thiol group-containing ethylenically unsaturated compound. As the graft component, an unsaturated carboxylic acid and/or an unsaturated carboxylic acid anhydride are/is preferably used.

Examples of the unsaturated carboxylic acid include acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2,2,1]hept-2-ene-5,6-dicarboxylic acid.

Examples of the unsaturated carboxylic anhydrides include, for example, maleic anhydride, itaconic anhydride, citraconic anhydride, tetrahydrophthalic anhydride, and bicyclo[2,2,1]hept-2-ene-5,6-dicarboxylic anhydride.

As the graft component, an unsaturated carboxylic acid anhydride is more preferably used. As the graft component, maleic anhydride is even more preferably used.

The graft components may be used alone or in combination of two or more.

The modified product is obtained by graft-modifying the copolymer of the 4-methyl-1-pentene and α-olefin with a graft component.

To graft-modify a copolymer of the 4-methyl-1-pentene and α-olefin with a graft component, for example, first, a copolymer of the 4-methyl-1-pentene and α-olefin is dissolved in a known organic solvent (for example, toluene). Next, the graft component and a radical polymerization initiator are added to the mixture, and mixed and heated (specifically, melt-mixed).

The modification amount (introduction amount) of the graft component in the modified product of the copolymer of the 4-methyl-1-pentene and α-olefin, i.e., the content ratio of the structural unit derived from the graft component in the modified product of the copolymer of the 4-methyl-1-pentene and α-olefin is, for example, 0.1% by mass or more, preferably 0.5% by mass or more, and also, for example, 10% by mass or less, preferably 5.0% by mass or less, more preferably 3.0% by mass or less, and even more preferably 2.0% by mass or less, with respect to the modified product of the copolymer of the 4-methyl-1-pentene and α-olefin.

The above-described modification amount can be confirmed, for example, by a known method such as measuring ¹H-NMR.

Examples of the radical polymerization initiator include an organic peroxide and an organic perester.

Examples of the organic peroxide include, for example, dicumyl peroxide, benzoyl peroxide, dichlorobenzoyl peroxide, dicumyl peroxide, di-tert-butyl peroxide, 2,5-dimethyl-2,5-di(peroxybenzoate)hexyne-3, 1,4-bis(tert-butylperoxyisopropyl)benzene, lauroyl peroxide, 2,5-dimethyl-2,5-di(tert-butylperoxi)hexyne-3, 2,5-dimethyl-2,5-di(tert-butylperoxide)hexane, and tert-butylperoxybenzoate, and 2,5-dimethyl-2,5-bis(t-butylperoxy)hexane. Examples of the organic perester include, for example, tert-butyl peracetate, tert-butyl perphenyl acetate, tert-butyl perisobutyrate, tert-butyl per sec-octoate, tert-butyl perpivalate, cumyl perpivalate, and tert-butyl perdiethylacetate.

As the radical polymerization initiator, an organic peroxide is preferably used. As the radical polymerization initiator, 2,5-dimethyl-2,5-bis(t-butylperoxy)hexane is more preferably used.

The blending ratio of the radical polymerization initiator is, for example, 0.001 parts by mass or more and, for example, 10 parts by mass or less with respect to 100 parts by mass of the copolymer of the 4-methyl-1-pentene and α-olefin.

The radical polymerization initiators may be used alone or in combination of two or more.

The heating temperature is, for example, 50°C or more, preferably 80°C or more, and for example, 250°C or less. The reaction time is, for example, 1 minute or more and 10 hours or less.

In this manner, a copolymer of the 4-methyl-1-pentene and α-olefin is graft-modified with a graft component, thereby obtaining a modified product (a varnish of a modified product) of the copolymer of the 4-methyl-1-pentene and α-olefin.

The weight-average molecular weight of the modified product, which is measured by a GPC method (gel permeation chromatography method) and converted into the standard polystyrene, is, for example, 10000 or more, preferably 50000 or more, more preferably 100000 or more, even more preferably 200000 or more, and is, for example, 500000 or less, preferably 300000 or less.

The weight-average molecular weight/number-average molecular weight (Mw/Mn) of the modified product is, for example, 1.5 or more, preferably 1,9 or more, and also, for example, 4.0 or less, preferably 3.0 or less.

In addition, no melting point of the modified product is observed. Alternatively, when the melting point is observed, the melting point is, for example, 199°C or less, preferably 150°C or less, more preferably 140°C or less, and also for example, 80°C or more, preferably 100°C or more.

When the melting point of the modified product is not observed or when the melting point is the above-described upper limit or less, the heat sealability can further be improved.

As described above, the resin component consists of a copolymer of the 4-methyl-1-pentene and α-olefin and/or a modified product of the copolymer of the 4-methyl-1-pentene and α-olefin. The resin component preferably consists of a copolymer of the 4-methyl-1-pentene and α-olefin without containing a modified product of the copolymer of the 4-methyl-1-pentene and α-olefin, or consists of a modified product of a copolymer of the 4-methyl-1-pentene and α-olefin without containing a copolymer of the 4-methyl-1-pentene and α-olefin.

Further, since the resin component consists of a copolymer of the 4-methyl-1-pentene and α-olefin and/or a modified product of the copolymer of the 4-methyl-1-pentene and α-olefin, the resin component substantially contains no other thermoplastic resins. The fact that the resin component substantially contains no other thermoplastic resins means that the content ratio of other thermoplastic resins is, for example, 5% by mass or less, preferably 1% by mass or less, more preferably 0.1% by mass or less, and even more preferably 0% by mass with respect to the resin component.

Examples of the other thermoplastic resin include the thermoplastic resin (B) described in Japanese Unexamined Patent Publication No. 2016-121322. Specifically, examples of the other thermoplastic resin include an olefin polymer (a polymer of an α-olefin (except 4-methyl-1-pentene)).

When the resin component substantially contains no other thermoplastic resins, the gas permeability can be improved.

The content ratio of the resin component is, for example, 80% by mass or more, preferably 90% by mass or more, more preferably 95% by mass or more, and for example, 100% by mass or less with respect to the coating composition.

### [Additives]

As necessary, the coating composition may contain additives in an appropriate ratio.

Examples of the additive include a leveling agent, an antifoaming agent, an antioxidant, a heat stabilizer, an ultraviolet absorber, a plasticizer, a surfactant, a pigment, a thixotropic agent, a thickener, a tackifier, a surface modifier, an anti-settling agent, a weathering agent, a pigment dispersant, an antistatic agent, a filler, an antifungal agent, and a silane coupling agent.

Additives may be used alone or in combination of two or more.

### [Preparation of Coating Composition]

The coating composition is prepared by mixing the resin component with the additive that is blended as necessary.

In the second step described later, the coating composition is dissolved by an organic solvent (described later) and prepared as a varnish of the coating composition. The varnish of the coating composition is an organic solvent solution of the coating composition.

Although described in detail later, the heat seal layer 3 is formed by applying the varnish of the coating composition to one surface of the substrate 2 in the thickness direction and drying the varnish.

The thickness of the heat seal layer 3 is, for example, 1 µm or more, preferably 3 µm or more from the viewpoint of moldability, and is, for example, less than 50 µm, preferably less than 20 µm, more preferably 19 µm or less from the viewpoint of improving heat sealability.

### <Method of Producing Laminate>

Referring to FIGS. 2A and 2B, one embodiment of the method of producing the laminate is described.

The method of producing the laminate 1 includes a first step of preparing a substrate 2, a second step of dissolving a coating composition in an organic solvent to prepare a varnish of the coating composition, and a third step of applying the varnish of the coating composition to one surface of the substrate 2 in the thickness direction and drying the varnish to dispose a heat seal layer 3 on one surface of the substrate 2 in the thickness direction.

### [First Step]

In the first step, the substrate 2 is prepared as shown in FIG. 2A.

### [Second Step]

In the second step, the coating composition is dissolved in an organic solvent to prepare a varnish of the coating composition.

Examples of the organic solvent include aliphatic hydrocarbons, alicyclic hydrocarbons, aromatic hydrocarbons, ketones, alkyl esters, glycol ether esters, ethers, and polar aprotic compounds. Examples of the aliphatic hydrocarbons include, for example, n-hexane, n-heptane, and octane. Examples of the alicyclic hydrocarbons include cyclohexane and methylcyclohexane. Examples of the aromatic hydrocarbons include toluene and xylene. Examples of the ketones include, for example, acetone, methyl ethyl ketone, methyl isobutyl ketone, and cyclohexanone. Examples of the alkyl esters include, for example, methyl acetate, ethyl acetate, butyl acetate, and isobutyl acetate. Examples of the glycol ether esters include methyl cellosolve acetate, ethyl cellosolve acetate, methyl carbitol acetate, ethyl carbitol acetate, ethylene glycol ethyl ether acetate, propylene glycol methyl ether acetate, 3-methyl-3-methoxybutyl acetate, and ethyl-3-ethoxypropionate. Examples of the ethers include, for example, diethyl ether, tetrahydrofuran, and dioxane. Examples of the polar aprotes include, for example, N-methylpyrrolidone, dimethylformamide, N,N'-dimethylacetamide, dimethylsulfoxide, and hexamethylphosphonylamide.

As the organic solvent, alicyclic hydrocarbons and/or alkyl esters are preferably used. As the solvent, methylcyclohexane and/or ethyl acetate are more preferably used.

The organic solvents may be used alone or in combination of two or more. Preferably, as the solvent, methylcyclohexane and ethyl acetate are used in combination.

The blending ratio of the organic solvent is, for example, 200 parts by mass or more and, for example, 1000 parts by mass or less with respect to 100 parts by mass of the resin component.

The solid content concentration of the varnish of the coating composition is, for example, 5% by mass or more, and, for example, 70% by mass or less.

### [Third Step]

**In** the third step, as shown in FIG. 2B, the varnish of the coating composition is applied to one surface of the substrate 2 in the thickness direction and dried, thereby disposing the heat seal layer 3 on one surface of the substrate 2 in the thickness direction.

To apply the varnish of the coating composition to one surface of the substrate 2 in the thickness direction, first, as necessary, one surface of the substrate 2 in the thickness direction is subjected to a surface treatment.

Examples of the surface treatment include corona treatment, plasma treatment, flame treatment, ozone treatment, primer treatment, glow treatment, and saponification treatment, and preferably corona treatment is used.

Then, the coating composition is applied to one surface of the substrate 2 in the thickness direction by a known method, and dried, as necessary, by heating.

The heating temperature is, for example, 50°C or more, preferably 80°C or more, and for example, 250°C or less. The heating time is, for example, 10 seconds or more, and for example, 600 seconds or less.

In particular, when the substrate 2 is a nonwoven fabric, the coating composition is applied to one surface of the substrate 2 in the thickness direction, and then left to stand, for example, for 1 hour, and, for example, for 50 hours or less in view of allowing the coating composition to be impregnated in the nonwoven fabric, and thereafter dried, as necessary, by heating.

In this manner, a heat seal layer 3 which is a dried product of the varnish of the coating composition (that is, a dried product of the coating composition) is disposed (formed) on one surface of the substrate 2 in the thickness direction. As described above, a laminate 1 is produced.

The laminate 1, as described above, includes the heat seal layer 3 which is a dried product of the coating composition. Therefore, excellent heat sealability is achieved.

Specifically, in the laminate 1, the peel strength measured by the following test is, for example, 2.0N/15mm or more, preferably 4.0N/15mm or more.

In the test, first, two laminates 1 are prepared. Next, a film is produced by attaching the two laminates 1 together so that the heat seal layers 3 of the two laminates are in contact with each other, and heat-sealing the two laminates under the conditions of 160°C, 0.3MPa, and 2 seconds. The film is peeled in a direction of 180° with respect to the heat seal surface under the conditions of a tensile rate of 50mm/min and a temperature of 23°C to measure the peel strength.

In addition, the oxygen permeation coefficient and carbon dioxide permeation coefficient of the laminate 1 are 1000cm³·mm/(m²·24hr·atm) or more.

More specifically, the oxygen permeation coefficient is 1000cm³·mm/(m²·24hr·atm) or more, preferably 1400cm³·mm/(m²·24hr·atm) or more, and, for example, 100000cm³·mm/(m²·24hr·atm) or less.

Further, the carbon dioxide permeation coefficient is 1000cm³·mm/(m²·24hr·atm) or more, preferably 2000cm³·mm/(m²·24hr·atm) or more, more preferably 4000cm³·mm/(m²·24hr·atm) or more, and, for example, 200000cm³·mm/(m² 24hr·atm) or less.

The method for measuring the oxygen permeation coefficient and the carbon dioxide permeation coefficient is detailed in Examples described later.

Such a laminate 1 is excellent in gas permeability and heat sealability, and thus can be preferably used, in particular, for a packaging film. Such a packaging film includes the laminate 1. Therefore, the packaging film is excellent in gas permeability and heat sealability.

### <Operations and Effects>

In the laminate 1, the coating composition includes a resin component consisting of a copolymer of the 4-methyl-1-pentene and α-olefin and/or a modified product of the copolymer of the 4-methyl-1-pentene and α-olefin. Therefore, the gas permeability can be improved.

Specifically, in Patent Document 1, from the viewpoint of improving the heat sealability, a polymer (specifically, a thermoplastic resin (B)) other than a polymer containing a structural unit derived from the 4-methyl-1-pentene is blended into the thermoplastic resin (A), but when the thermoplastic resin (B) is blended, there is a problem that the gas permeability is lowered.

On the other hand, in the laminate 1, the resin component consists of a copolymer of the 4-methyl-1-pentene and α-olefin and/or a modified product of the copolymer of the 4-methyl-1-pentene and α-olefin. Therefore, the resin component substantially contains no other thermoplastic resins (specifically, thermoplastic resin (B) of Patent Document 1).

Therefore, it is possible to suppress a decrease in gas permeability caused by blending the thermoplastic resin (B).

As a result, the gas permeability can be improved.

In the laminate 1, the heat seal layer 3 is a dried product of the coating composition. Therefore, excellent heat sealability is achieved. Specifically, in the laminate 1, in particular, even when the substrate 2 is a gas-permeable porous substrate (preferably paper and nonwoven fabric) and has irregularities on its surface, the thickness of the heat seal layer 3 can be reduced (for example, to less than 50µm), and the heat sealability can be improved.

### Examples

Next, the present invention is described based on Examples and Comparative Examples. The present invention is, however, not limited to them. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### <Details of Components>

The trade names and abbreviations of the components used in each Production Examples, Examples, and Comparative Examples are detailed.
Paper: trade name "OK Blizzard" produced by Oji Materia Co., Ltd.
Nonwoven fabric: trade name "Syntex PK102" produced by Mitsui Chemicals, Inc.
TPX: a film made of a polymer of 4-methyl-1-pentene, trade name "Opulent XP-88B", produced by Mitsui Chemicals Tohcello, Inc.
Propylene/ethylene random copolymer: Prime Polypro (registered trademark) F327, propylene/ethylene random copolymer, produced by Prime Polymer Co., Ltd.

### <Production of Copolymer of 4-methyl-1-pentene and Propylene>

### Production Example 1

300ml of n-hexane (dried on activated alumina in a dry nitrogen atmosphere) and 450ml of 4-methyl-1-pentene were blended at 23°C in a sufficiently nitrogen-substituted SUS autoclave with a stirring blade (1.5L in volume). Next, 0.75ml of a toluene solution of 1.0 mmol/ml triisobutylaluminum (TIBAL) was blended in the autoclave and stirred.

Next, the autoclave was heated until its internal temperature reached 60°C, and pressurized with propylene so that the total pressure (gauge pressure) was 0.40 MPa.

Then, 0.34ml of a previously prepared toluene solution containing 1 mmol of methylaluminoxane in terms of Al and 0.01 mmol of diphenylmethylene (1-ethyl-3-t-butylcyclopentadienyl) (2,7-di-t-butyl-fluorenyl) zirconium dichloride was pressed into the autoclave with nitrogen to initiate the polymerization reaction. During the polymerization reaction, the temperature was adjusted so that the internal temperature of the autoclave was 60° C.

After 60 minutes since the start of the polymerization, 5ml of methanol was pressed into the autoclave with nitrogen to stop the polymerization reaction. Thereafter, the inside of the autoclave was depressurized to atmospheric pressure. After the depressurization, acetone was added to the reaction solution while the reaction solution was being stirred. In this manner, a reaction solution containing a copolymer of 4-methyl-1-pentene and propylene was obtained.

Next, the reaction solution containing the copolymer of 4-methyl-1-pentene and propylene was dried under a reduced pressure at 100°C for 12 hours. In this manner, 36.9g of a powdery copolymer of 4-methyl-1-pentene and propylene was obtained.

The weight-average molecular weight of the copolymer was 337000. The weight-average molecular weight/number-average molecular weight (Mw/Mn) of the copolymer was 2.1. Also, a melting point of the copolymer was not observed. In the copolymer, the content ratio of the structural unit derived from the 4-methyl-1-pentene was 73 mol%, and the content ratio of the structural unit derived from the propylene was 27 mol %, with respect to the total amount of the structural unit derived from the 4-methyl-1-pentene and the structural unit derived from the propylene. The above-described content ratio was measured by ¹³C-NMR.

### Production Example 2

In the same manner as in Production Example 1, 44.0 g of a powdery copolymer of 4-methyl-1-pentene and propylene was obtained. However, in Production Example 2, the pressure was applied with propylene so that the total pressure (gage pressure) was 0.19 MPa.

The weight-average molecular weight of the copolymer was 340000. The weight-average molecular weight/number-average molecular weight (Mw/Mn) of the copolymer was 2.1. The copolymer had a melting point of 132°C. In the copolymer, the content ratio of the structural unit derived from the 4-methyl-1-pentene was 85 mol%, and the content ratio of the structural unit derived from the propylene was 15 mol%, with respect to the total amount of the structural unit derived from the 4-methyl-1-pentene and the structural unit derived from the propylene. The above-described content ratio was measured by ¹³C-NMR.

<Production of Maleic Anhydride-modified Product of Copolymer of 4-methyl-1-pentene and Propylene> Preparation Example 3

The copolymer of 4-methyl-1-pentene and propylene of Preparation Example 1 was charged from a resin charging portion of a bent twin-screw kneading extruder. Further, as a graft component, 2 parts by mass of maleic anhydride with respect to 100 parts by mass of the copolymer of 4-methyl-1-pentene and propylene, and as a radical-polymerization initiator, 0.4 parts by mass of 2,5-dimethyl-2,5-bis(t-butylperoxy)hexane with respect to 100 parts by mass of the copolymer of 4-methyl-1-pentene and propylene were blended.

Next, the copolymer of 4-methyl-1-pentene and propylene, the graft component, and a radical polymerization initiator were melt-kneaded at 190°C. Thereafter, the kneaded material was discharged from the kneading extruder and cooled. After the cooling, the kneaded material was pelletized with a pelletizer. In this manner, a maleic anhydride-modified product of the copolymer of 4-methyl-1-pentene and propylene was obtained.

The weight-average molecular weight of the modified product was 231000. The weight-average molecular weight/number-average molecular weight (Mw/Mn) of the modified product was 2.0. In addition, a melting point of the modified product was not observed. The modification amount (introduction amount) of the graft component in the maleic anhydride-modified product of the copolymer of 4-methyl-1-pentene and propylene was 0.9 mass %. The above-described modification amount was measured by ¹H-NMR measurement.

### Production Example 4

A maleic anhydride-modified product of the copolymer of 4-methyl-1-pentene and propylene was obtained in the same manner as in Preparation Example 3. However, in Preparation Example 4, the copolymer of 4-methyl-1-pentene and propylene of Preparation Example 2 was used instead of the copolymer of 4-methyl-1-pentene and propylene of Preparation Example 1.

The weight-average molecular weight of the modified product was 208000. The weight-average molecular weight/number-average molecular weight (Mw/Mn) of the modified product was 2.1. The modified product had a melting point of 132°C. The modification amount (introduction amount) of the graft component in the maleic anhydride-modified product of the copolymer of 4-methyl-1-pentene and propylene was 1.8 mass %. The modification amount was measured by ¹H-NMR measurement.

### <Production of Maleic Anhydride-modified Propylene/1-Butene Copolymer>

### Production Example 5

To a sufficiently nitrogen-substituted autoclave (2L in volume), 900 ml of hexane and 90 g of 1-butene were blended, and then 1 mmol of triisobutylaluminum was added thereto, and the temperature thereof was raised to 70°C. Then, propylene was supplied to achieve a total pressure of 7kg/cm²G, and 0.30 mmol of methylaluminoxane and 0.001 mmol of rac-dimethylsilylene-bis{ 1-(2-methyl-4-phenylindenyl)}zirconium dichloride in terms of Zr atoms were added. Then, copolymerization reaction was carried out for 30 minutes while propylene was continuously supplied to maintain the total pressure at 7kg/cm²G. After the polymerization reaction, the autoclave was degassed, and the polymer was collected in a large amount of methanol, and dried under a reduced pressure at 110°C for 12 hours. In this manner, a propylene/1-butene copolymer was obtained.

The weight-average molecular weight of the propylene/1-butene copolymer was 300000. The melting point thereof was 78.3°C. In the copolymer, the content ratio of the structural unit derived from the propylene was 75 mol% and the content ratio of the structural unit derived from the 1-butene was 25 mol%, with respect to the total amount of the structural unit derived from the propylene and the structural unit derived from the 1-butene. The above-described content ratio was measured by ¹³C-NMR measurement.

Then, 3kg of the propylene/1-butene copolymer was added to 10L of toluene, and the temperature thereof was raised to 145°C in a nitrogen atmosphere to dissolve the propylene/1-butene copolymer in the toluene. Further, while being stirred, the dissolved mixture was charged with 382g of maleic anhydride and 175g of di-tert-butylperoxide as a radical polymerization initiator over 4 hours, and further stirred at 145°C for 2 hours. In this manner, a maleic anhydride-modified propylene/1-butene copolymer was obtained. Thereafter, this was then cooled, and a large amount of acetone was charged thereto, and the maleic anhydride-modified propylene/1-butene copolymer was precipitated, then filtered, washed with acetone, and then dried under vacuum.

The weight-average molecular weight (Mw) of the maleic anhydride-modified propylene/1-butene copolymer was 100,000. The melting point of the maleic anhydride-modified propylene/1-butene copolymer was 75.8° C. In addition, in the maleic anhydride-modified propylene/1-butene copolymer, the modification amount of maleic anhydride was 0.8 mass%. The above-described modification amount was measured by ¹H-NMR measurement.

### <Production of Homopolymer of 4-methyl-1-pentene>

### Production Example 6

36.9g of a powdery homopolymer of 4-methyl-1-pentene was obtained in the same manner as in Production Example 1. However, in Production Example 6, the pressurization with propylene was not carried out.

The weight-average molecular weight of the polymer was 337000. The weight-average molecular weight/number-average molecular weight (Mw/Mn) of the polymer was 2.1. The copolymer had a melting point of 222°C.

### <Production of Laminate>

### Example 1

### [First step]

Paper was prepared as a substrate.

### [Second Step]

Into a sufficiently nitrogen-substituted flask (5L in volume), 650 parts by mass of the copolymer of Production Example 1, 1040 parts by mass of ethyl acetate, and 1560 parts by mass of methylcyclohexane were charged, and the temperature thereof was raised to 70°C, and then the mixture was dissolved for 3 hours. Then, it was cooled to 60 °C or less. In this manner, a varnish of the coating composition was prepared. The solid content concentration of the varnish of the coating composition was 20% by mass.

### [Third Step]

The varnish of the coating composition was applied to one surface of the substrate in the thickness direction, and dried at 100°C for 1 minute. In this manner, a heat seal layer (a film thickness of 19 µm after drying) was disposed on one surface of the substrate in the thickness direction. As described above, a laminate was produced.

### Examples 2 to 6 and Comparative Examples 1, 2, and 4

A laminate was produced based on the same manner as in Example 1. However, according to the descriptions in Table 1, the type of the substrate and the composition of the varnish of the coating composition were changed. In Example 5 and Comparative Example 2, the varnish of the coating composition was applied to one surface of the substrate in the thickness direction, left to stand at room temperature for 5 hours, and then dried at 100°C for 1 minute.

### Comparative Example 3

60 parts by mass of the copolymer of Preparation Example 1 and 40 parts by mass of a propylene-ethylene random copolymer were mixed (dry blended) together to obtain a mixture. Next, the mixture was charged into a hopper of a 20-mmφ single screw extruder (single screw sheet molding machine manufactured by TANAKA IRON WORKS CO., LTD.) equipped with a T-die with a lip-width of 240 mm. Then, the cylinder temperature was set at 230°C, and the die temperature was set at 230°C, and the melt-kneaded material was extruded to have a thickness of 50µm from the T-die, thereby casting the material on one surface of the paper in the thickness direction. In this manner, a laminate was produced.

### <Evaluations>

### [Gas Permeability]

Of the laminate of each of the Examples and the Comparative Examples, the oxygen permeation coefficient (units: cm³·mm/(m²·24h·atm)) and the carbon dioxide permeation coefficient (units: cm³·mm/(m²·24h·atm)) were measured.

Specifically, first, the laminate of each of Examples and Comparative Examples was formed into a shape of a width of 30mm × a length of 30mm.

Then, in conformity to JIS K7126-1, using a differential pressure method gas permeability measuring device (manufactured by Toyo Seiki Seisaku-sho, Ltd.), the laminate with a measurement area of 7cm² was measured under the conditions of the test temperature 23°C and test humidity 0%RH. The measurement area of the laminate was adjusted by preparing two pressure-sensitive adhesive aluminum masks with a 25-mm diameter hole in the central portion, manufactured by Modern Cotrol, and laminating the two masks so as to sandwich the sample to be measured between the masks. Specifically, the films were placed such that the central holes of the two masks overlapped with each other. The results are shown in Table 1.

### [Heat Sealability]

Two laminates were prepared by cutting the laminate of each of Examples and Comparative Examples into a strip having a width 150mm × a length 50mm. A film was produced by attaching two laminates so that the heat seal layers thereof were in contact with each other, and heat-sealing the laminate using a heat-sealing tester (heat-gradient heat-seal tester TP-701-B, produced by Tester Industry Co., Ltd.) under the conditions of a sealing width 5mm, 160° C, a sealing pressure of 0.3MPa, and 2 seconds. The film was peeled in a direction of 180° with respect to the heat seal surface using an Intesco precision tester (210N type (produced by INTESCO CORPORATION)) at a tensile rate of 50mm/minute and a temperature of 23°C to measure the peel strength (units: N/15mm). The test was performed 5 times, and the average value is shown in Table 1.

### [Table 1]

**Table 1**

| Ex. · Comp.Ex. No. | | | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 |
|---|---|---|---|---|---|---|---|---|---|---|---|---|---|
| Substrate | | | | Paper | Paper | Paper | Paper | Nonwoven fabric | TPX | TPX | Nonwoven fabric | Paper | Paper |
| Varnish of coating composition | Resin component | Copolymer of 4-methyl-1-pentene and α-olefin | Production Ex. 1 | 650 | - | - | - | 650 | 650 | - | - | Cast molding (60 parts by mass of copolymer of Preparation Example 1 and 40 parts by mass of propylene copolymer) | - |
| | | | Production Ex. 2 | - | 650 | - | - | - | - | - | - | | 390 |
| | | Modified product of copolymer of 4-methyl-1-pentene and *α* -olefin | Production Ex. 3 | - | - | 650 | - | - | - | - | - | | - |
| | | | Production Ex. 4 | - | - | - | 650 | - | - | - | - | | - |
| | | Maleic anhydride-modified propylene/ 1-butene copolymer | Production Ex. 5 | - | - | - | - | - | - | 650 | - | | 260 |
| | | Homopolymer of 4-methyl-1-pentene | Production Ex. 6 | - | - | - | - | - | - | - | 325 | | - |
| | Organic solvent | Ethyl acetate | | 1040 | 1040 | 1040 | 1040 | 1040 | 1040 | 520 | - | | 1040 |
| | | Methylcyclohexane | | 1560 | 1560 | 1560 | 1560 | 1560 | 1560 | 2080 | - | | 1560 |
| | | Xylene | | - | - | - | - | - | - | - | 2925 | | - |
| Evaluations | Gas permeability | Gas permeation coefficient (cm³•mm/(m²•24h• atm)) | Oxygen | 1500 | 1500 | 1500 | 1500 | 1500 | 1500 | 740 | 1300 | 430 | 930 |
| | | | Carbon dioxide | 5000 | 5000 | 5000 | 5000 | 5000 | 5000 | 2300 | 4300 | 1500 | 3100 |
| | Heat sealability | Peel strength (N/15mm) | | 5 | 5 | 5 | 5 | 5 | 20 | 0 | 0 | 1 | 2 |

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

### Industrial Applicability

The laminate, packaging film, and method of producing the laminate of the present invention are preferably used, for example, in a packaging material.

## Claims

1. A laminate comprising a substrate and a heat seal layer in order toward one side in a thickness direction,
wherein the heat seal layer is a dried product of a coating composition,
wherein the coating composition includes a resin component,
wherein the resin component consists of a copolymer of 4-methyl-1-pentene and an α-olefin (except 4-methyl-1-pentene) having 2 or more and 20 or less carbon atoms and/or a modified product of the copolymer,
wherein in the copolymer, with respect to a total amount of a structural unit derived from the 4-methyl-1-pentene and a structural unit derived from the α-olefin, a content ratio of the structural unit derived from the 4-methyl-1-pentene is 50 mol% or more and 99 mol% or less, and a content ratio of the structural unit derived from the α-olefin is 1 mol% or more and 50 mol% or less, and
wherein the laminate has an oxygen permeation coefficient of 1000cm³·mm/(m² 24hr·atm) or more and a carbon dioxide permeation coefficient of 1000cm³·mm/(m²·24hr·atm) or more.

2. The laminate according to claim 1,
wherein the substrate is a gas-permeable porous substrate or a substrate made of a polymer of 4-methyl-1-pentene.

3. The laminate according to claim 1,
wherein the heat seal layer has a thickness of 1 µm or more and less than 50 µm.

4. The laminate according to claim 1, having a peel strength of 2.0N/15mm or more, the peel strength measured by the following test.
Test: Two laminates are prepared. A film is produced by attaching the two laminates so that the heat seal layers of the two laminates are in contact with each other, and heat-sealing the two laminates under conditions of 160° C, 0.3 MPa, and 2 seconds. The peel strength is measured by peeling the film in a direction of 180° with respect to its heat seal surface under conditions of a tensile rate of 50mm/minute and a temperature of 23°C.

5. A packaging film comprising the laminate according to claim 1.

6. A method of producing the laminate according to claim 1, the method comprising:
a first step of preparing the substrate;
a second step of dissolving the coating composition in an organic solvent to prepare a varnish; and
a third step of applying the varnish to one surface of the substrate in the thickness direction and drying the varnish to dispose the heat seal layer.
